# EUROPEAN PATENT SPECIFICATION

(11) **EP 3 148 710 B1**
(45) Date of publication and mention of the grant of the patent: **04.07.2018**
(21) Application number: 15823583.8
(22) Date of filing: 28.05.2015
(51) Int. Cl.: B05B 15/00

(54) **A PLANT AND SYSTEM FOR THE TREATMENT OF ARTICLES**
ANLAGE UND SYSTEM ZUR BEHANDLUNG VON GEGENSTÄNDEN
INSTALLATION ET SYSTÈME POUR LE TRAITEMENT D'ARTICLES

(30) Priority: 28.05.2014 DE 102014008052
(43) Date of publication of application: 05.04.2017
(73) Proprietor: Eisenmann SE, 71032 Böblingen (DE)
(72) Inventor: JUHAS, Stefan, 71134 Aidlingen (DE); RAU, Thomas, 71032 Böblingen (DE)
(74) Representative: Ostertag & Partner Patentanwälte mbB
(86) International application number: PCT/AZ2015/000004
(87) International publication number: WO 2016/026009

(56) References cited:
- WO-A1-2011/057786
- DE-A1-102011 103 117
- DE-U1- 8 621 949
- US-A- 3 493 415
- US-A- 4 173 924

## Description

The invention relates to an installation for surface treating, in particular painting, objects, in particular vehicle body parts, having
a) a treatment booth which defines a treatment space in which a booth atmosphere prevails;
b) a transport system by means of which the objects can be transported into the treatment space and out of it again;
c) at least one treatment unit by means of which treatment of the objects can be carried out in the treatment space and which requires a process gas for the operation,
d) a supply device by means of which the process gas can be supplied to the at least one treatment unit, wherein the process gas arrives in the treatment space during the treatment procedure and thus contributes to the booth atmosphere.

The invention moreover relates to a process for surface treating, in particular painting, objects, in particular vehicle body parts, in which
a) a treatment booth defines a treatment space in which a booth atmosphere prevails;
b) the objects are transported into the treatment space and out of it again by means of a transport system;
c) the objects are treated in the treatment space by means of at least one treatment unit which requires a process gas for the operation,
d) the process gas is supplied to the at least one treatment unit by means of a supply device, wherein the process gas arrives in the treatment space during the treatment procedure and thus contributes to the booth atmosphere.

See for example WO2011/057786 as background prior- art. Rotary atomisers with a rotating bell, which rotates at high speeds, are used for example as treatment units to paint objects. The rotating bell is driven with the aid of a turbine which is acted upon by the process gas. Air is conventionally used as the process gas. At the same time, in a rotary atomiser, process gas can be used to form the discharged spray jet in that the process gas is conducted to the rotating bell as a so-called control gas, i.e. - in the case of air - control air, and envelopes the discharged paint particles, so to speak. To this end, process gas can be conducted by the turbine to the rotating bell via inner channels in the rotary atomiser or via a line which is independent thereof. In each case, during operation, the process gas arrives in the treatment space which is laden with further components during the treatment procedure. During the painting process, for example, the booth atmosphere comprises, amongst other things, further paint overspray, i.e. paint, which has not arrived on the object to be painted, as well as solvent.

Treatment processes have more recently been established which can no longer be carried out in an air atmosphere, but instead require a special atmosphere. For example, in the painting process, UV paints are used which can be hardened under the effect of UV radiation. A carbon dioxide atmosphere, for example, is often established in the treatment space as a special atmosphere, for which carbon dioxide is supplied as booth gas to the treatment space.

So that the booth atmosphere in such cases is not contaminated, the gas used as the process gas for the treatment unit is the same type as that which is also conducted into the treatment space as booth gas.

The process gas is essentially a resource which has to be produced and possibly processed and conditioned in advance. This applies in particular for process gases other than air, for example carbon dioxide or nitrogen, but also for air itself.

The object of the invention, therefore, is to provide an installation and a process of the type mentioned at the outset, which can be operated in resource-friendly manner in terms of the process gas.

This object is achieved in an installation of the type mentioned at the outset in that
e) a separating system is provided, to which booth atmosphere can be supplied and by means of which process gas can be separated from the booth atmosphere.

According to the invention, it has been recognised that it is possible and useful to separate the process gas from the booth atmosphere so that it can be supplied for further use and possibly re-use within the installation.

It is particularly favourable here if the supply system is connected to the separating system in such a way that separated process gas can be supplied to the treatment unit. The process gas is therefore guided in a circuit. The proportion of freshly supplied process gas for the treatment unit can thereby be lowered and, optimally, reduced to zero.

In particular, if the amount of process gas separated from the booth atmosphere is greater than that required to operate the treatment units, for example at idle times, it is advantageous if the separating system comprises a gas reservoir into which separated process gas can be conducted.

Depending on the type of process gas, it can be favourable if the separating system comprises a multi-stage separating device.

An effective separation can be brought about here in that the separating system comprises a compressor in which booth atmosphere can be compressed.

To separate fluids, e.g. solvents, which are taken up in the booth atmosphere from the process gas, it is favourable if the separating device comprises a compressed-gas refrigeration drier to which the compressed booth atmosphere can be supplied and in which fluid which is entrained by the booth atmosphere can be condensed out.

An atmosphere in the treatment space which is adapted to the type of treatment can be generated by a booth gas system by means of which a booth gas can be supplied to the treatment space.

As mentioned above, the booth gas is preferably an inert gas, in particular carbon dioxide.

The booth gas and the process gas are preferably of the same type, with the process gas also preferably being an inert gas, in particular carbon dioxide.

The above-mentioned object is achieved in the process of the type mentioned at the outset in that
e) booth atmosphere is supplied to a separating system by means of which process gas is separated from the booth atmosphere.

The advantages of this measure, and the inventive measure explained below, correspond to the advantages mentioned above in relation to the installation.

It is accordingly favourable if separated process gas is supplied to the treatment unit.

Separated process gas is preferably conducted into a gas reservoir.

It is advantageous if the separation is carried out in multiple stages, wherein booth atmosphere is preferably compressed in a compressor and the compressed booth atmosphere is supplied to a compressed-gas refrigeration drier in which fluid which is entrained by the booth atmosphere is condensed out.

A booth gas is preferably supplied to the treatment space, with an inert gas, in particular carbon dioxide, preferably being used as the booth gas.

The same type of gas can advantageously be used as booth gas and process gas.

An inert gas, in particular carbon dioxide, is preferably used as process gas.

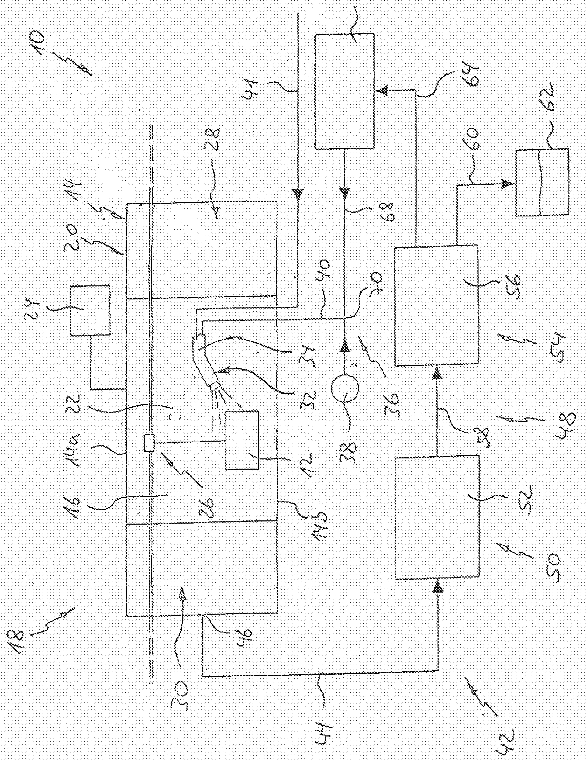

An exemplary embodiment of the invention is explained in more detail below with reference to the single Figure.

In this, 10 denotes an installation, as a whole, for surface treating objects 12, which comprises a treatment booth 14 which delimits a treatment space 16. The objects 12 in the present exemplary embodiment are only shown in highly schematic form. The booth atmosphere prevailing in the treatment space 16 has a composition which can change during operation of the installation, in particular on account of components which are released into the treatment space 16 as a result of the treatment procedure.

As an example of such an installation 10 for surface treatment, a paint booth 18 is shown in which the objects 12 are painted. Objects 12 to be painted are, for example, vehicle bodies or, in particular, vehicle body parts or attached parts of vehicle bodies, such as bumpers. The objects 12 to be painted are for example cleaned and degreased in pro-treatment stations (not shown specifically) which are located upstream of the painting installation 18.

The surface treatment installation 10 comprises, as a treatment booth 14, a paint booth 20 which delimits a paint tunnel 22 as a treatment space 16. The treatment booth 14 comprises a booth ceiling 14a and a booth floor 14b as well as side walls, which are not provided with a specific reference numeral.

A booth gas can be supplied to the treatment space 16, i.e. the paint tunnel 22 here, in a manner known per se by means of a booth gas system 24 which is only indicated in highly schematic form. With a booth gas other than air, it is possible to generate and maintain a special atmosphere. A special atmosphere should be understood to mean any atmosphere which differs from the external atmosphere surrounding the treatment space 16. A special atmosphere can, in particular, be an inert gas atmosphere, but it can also include a clean room atmosphere or other working atmospheres.

In a modification which is not shown specifically, the booth gas system 24 comprises, amongst other things, the booth ceiling 14a which is then constructed in conventional manner as a lower delimitation of an air supply space with a filter cover. From the air supply space, conditioned air arrives as booth gas in the paint tunnel 22 and flows through this from top to bottom, during which the air takes up overspray produced during the painting procedure. The overspray-laden air then arrives in a region below the paint tunnel 22, for which the booth floor 14b is constructed to be permeable, for example as a result of a grating. A separating device, by means of which the air can be freed of the overspray, can then be located in this lower region. This procedure is known from the prior art. In this case, the booth atmosphere is therefore formed by the solvent-containing and overspray-laden tunnel air.

A transport system 26 is present, which is known per se and by means of which objects 12 to be painted are transported from an entry side with an entry region 28 of the paint tunnel 22 to an exit side with an exit region 30 of the paint tunnel 22, one or both of which can be formed as a lock. It is possible to dispense with a lock if the booth atmosphere prevailing in the regions adjoining the entry region 28 or the exit region 30 of the installation 10 is the same as that in the treatment space 16. In the Figure, the transport system 26 is shown by way of example as an overhead conveyor system. However, a floor-based transport system or other type of transport system is likewise possible.

In each case, the objects 12 to be painted can be brought by the transport system 26 into the paint tunnel 22 through the entry region 28 and out of the paint tunnel again through the exit region 30, during which the booth atmosphere in the treatment space 16 is maintained.

One or more treatment units 32 are located in the interior of the treatment space 16, with only one treatment unit 32 being shown in the figure. The treatment unit 32 can be guided by a multi-axis robot, in particular by an articulated robot A robot of this type is also known per se and therefore needs no further explanation.

In the present exemplary embodiment, the painting installation 18 is designed for the application of UV paints which, particularly in view of the rapid hardening by UV radiation which occurs after the application, has to take place in an inert gas atmosphere. A coating process using UV paints is conventionally carried out in a carbon dioxide atmosphere. A carbon dioxide atmosphere is therefore generated in the paint tunnel 22 by the system 24. It is also possible in other applications to provide special atmospheres other than carbon dioxide, for example nitrogen.

The treatment unit 32 in the present case is a rotary atomiser 34. The treatment units 32 can also be designed for purposes other than application purposes. For example, the treatment units 30 can also be formed by gripper units which can move and handle the objects 12 in the treatment space 16.

The treatment unit 32 requires a process gas for its operation. In the case of a rotary atomiser 34, a process gas of this type serves to drive a rotating bell by means of a turbine which is acted upon by the process gas. At the same time, process gas can be used in a rotary atomiser to form the discharged spray jet in that the process gas is conducted to the rotating bell as so-called control air and envelopes the discharged paint particles, so to speak. To this end, process gas can be conducted by the turbine to the rotating bell via inner channels in the rotary atomiser or via a line which is independent thereof.

To operate the treatment unit 32, the installation 10 therefore comprises a supply device 36 with a process gas source 38 from which the treatment unit 32 can be supplied with the process gas via a supply line 40. In the case of the rotary atomiser 34, this is supplied with paint via a further line 41, which paint is then applied to the objects 12.

During operation, i.e. in the present case during the painting procedure using the rotary atomiser 34, the process gas for the treatment unit 32 arrives in any case in the treatment space 16 and thus contributes to the booth atmosphere therein. Paint overspray and solvent moreover arrive in the booth atmosphere. The booth atmosphere is therefore a constant mix of various components, which also comprises the associated booth gas from the system 24.

The booth gas provided by the system 24 and the process gas for the treatment unit 32 can be the same type of gas. In the case of an inert gas atmosphere explained above, the inert gas used is also used as process gas for the treatment unit 32. This ensures that the inert gas atmosphere is not contaminated by a foreign gas which is possibly further polluted

If carbon dioxide is used as inert gas, the treatment unit 32, i.e. the rotary atomiser 34 in the present case, is therefore supplied with carbon dioxide as process gas by means of the supply device 36.

In order to now keep the consumption of process gas as low as possible, the treatment installation 10 comprises a separating system 42 to which booth atmosphere can be supplied and by means of which process gas can be separated from the booth atmosphere. This opens up the possibility of further using or reusing the separated process gas.

To this end, the separating system 42 comprises an output line 44 which is connected by way of an output connection 46 to the treatment space 16 and leads to a separating device 48. In the present exemplary embodiment, the separating device 48 is designed to separate carbon dioxide as process gas from the booth atmosphere, in which case the separating principle explained below can also be applied to other process gases which are suitable for this.

The separating device 48 is of a multi-stage construction. In the present exemplary embodiment, it is two-stage and comprises a compressor 52 as the first separating stage 50 and a compressed-gas refrigeration drier 56 as the second separating stage 54, which are connected to one another by way of a connecting line 58 so that compressed booth atmosphere can be supplied to the compressed-gas refrigeration drier 56.

Both the compressor and the refrigeration drier are known per se and therefore do not need further explanation. A possible compressor 52 is, for example, in particular a screw-type compressor; the refrigeration drier 56 can be constructed for example as a fin-type heat exchanger or plate-type heat exchanger.

From the compressed-gas refrigeration drier 56, an outlet line 60 leads to a collecting vessel 62 and a discharge line 64 leads to a gas reservoir 66.

The booth atmosphere, which has now taken up process gas from the treatment unit 32 during operation of the installation 10 and moreover contains paint overspray and solvent, is conveyed via the output line 44 to the compressor 52 and compressed there. The compressed booth atmosphere then arrives via the connecting line 58 at the compressed-gas refrigeration drier 56 in which the solvent entrained by the booth atmosphere is condensed out and conducted into the collecting vessel 62 by way of the outlet line 60. With the solvent, paint overspray and other impurities are also removed from the booth atmosphere so that, after flowing through the compressed-gas refrigeration drier 56, pure inert gas flows into the gas reservoir 66. In general terms, fluid entrained by the booth atmosphere condenses in the compressed-gas refrigeration drier 56.

In other applications, water can be condensed out of the booth atmosphere in this way and the booth atmosphere can therefore be cleaned and dehumidified.

If the process gas for operating the treatment unit 32 differs from the booth gas from the system 24, the separating device 46 can comprise one or more further separating stages to also separate these components. The necessary separating stages then depend on the composition of the mix.

The supply system 36 is now connected to the separating system 42 in such a way that the separated process gas can be supplied to the treatment unit 32. To this end, in the present exemplary embodiment, the gas reservoir 66 is connected to the supply line 40 via a line 68 and a valve 70. By means of the valve 70, it is possible to specify whether the treatment unit 32 is supplied with process gas from the process gas source 38 or with process gas from the gas reservoir 66 or a mix of process gas from the process gas source 38 and the gas reservoir 66.

As a result of the separating device 48, a circuit of the process gas is formed overall so that, during operation, the treatment unit 32 can essentially be operated in resource-friendly manner using recovered process gas from the gas reservoir 66. However, the process gas source 38 may be required to supply the treatment unit 32 with process gas, in particular when starting up the installation 10 and the separating system 42.

## Claims

1. An installation for surface treating, in particular painting, objects (12), in particle vehicle body parts, having
a) a treatment booth (14) which defines a treatment space (16) in which a booth atmosphere prevails;
b) a transport system (26) by means of which the objects (12) can be transported into the treatment space (16) and out of it again;
c) at least one treatment unit (32) by means of which a treatment of the objects (12) can be carried out in the treatment space (16) and which requires a process gas for the operation,
d) a supply device (36) by means of which the process gas can be supplied to the at least one treatment unit (32), wherein the process gas arrives in the treatment space (16) during the treatment procedure and thus contributes to the booth atmosphere,
**characterised in that**
e) a separating system (42) is provided, to which booth atmosphere can be supplied and by means of which process gas can be separated from the booth atmosphere.

2. An installation according to Claim 1, **characterised in that** the supply system (36) is connected to the separating system (42) in such a way that separated process gas can be supplied to the treatment unit (32), in particular **in that** the separating system (42) comprises a gas reservoir (66) into which separated process gas can be conducted.

3. An installation according to one of Claims 1 or 2, **characterised in that** the separating system (42) comprises a multi-stage separating device (48).

4. An installation according to one of Claims 1 to 3, **characterised in that** the separating system (42) comprises a compressor (52) in which booth atmosphere can be compressed, in particular **in that** the separating device (48) comprises a compressed-gas refrigeration dryer (56) to which the compressed booth atmosphere can be supplied in which fluid entrained by the booth atmosphere can be condensed out.

5. An installation according to one of Claims 1 to 4, **characterised in that** a booth gas system (24) is present, by means of which a booth gas can be supplied to the treatment space (16).

6. An installation according to Claim 5, **characterised in that** the booth gas is an inert gas, in particular carbon dioxide.

7. An installation according to Claim 5 or 6, **characterised in that** the booth gas and the process gas are of the same type.

8. An installation according to one of Claims 1 to 7, **characterised in that** the process gas is an inert gas, in particular carbon dioxide.

9. A process for surface treating, in particular painting, objects (12), in particular vehicle body parts, in which
a) a treatment booth (14) defines a treatment space (16) in which a booth atmosphere prevails;
b) the objects (12) are transported into the treatment space (16) and out of it again by means of a transport system (26);
c) the objects (12) are treated in the treatment space (16) by means of at least one treatment unit (32) which requires a process gas for the operation,
d) the process gas can be supplied to the at least one treatment unit (32) by means of a supply device (36), wherein the process gas arrives in the treatment space (16) during the treatment procedure and thus contributes to the booth atmosphere,
**characterised in that**
e) booth atmosphere is supplied to a separating system (42) by means of which process gas can be separated from the booth atmosphere.

10. A process according to Claim 9, **characterised in that** separated process gas is supplied to the treatment unit (32), in particular **in that** separated process gas is conducted into a gas reservoir (66).

11. A process according to one of Claims 9 or 10, **characterised in that** the separation is carried out in multiple stages (50, 54).

12. A process according to one of Claims 9 to 11, **characterised in that** booth atmosphere is compressed in a compressor (52), in particular **in that** the compressed booth atmosphere is supplied to a compressed-gas refrigeration dryer (56) in which fluid entrained by the booth atmosphere is condensed out.

13. A process according to one of Claims 9 to 12, **characterised in that** a booth gas is supplied to the treatment space (16), in particular **in that** an inert gas, in particular carbon dioxide, is used as booth gas.

14. A process according to Claim 13, **characterised in that** the same type of gas is used as booth gas and process gas.

15. A process according to one of Claims 9 to 14, **characterised in that** an inert gas, in particular carbon dioxide, is used as process gas.

## Patentansprüche

1. Anlage zur Oberflächenbehandlung, insbesondere zum Lackieren, von Gegenständen (12), insbesondere von Karosserieteilen, mit
a) einer Behandlungskabine (14), die einen Behandlungsraum (16) vorgibt, in welchem eine Kabinenatmosphäre herrscht;
b) einem Transportsystem (26), mittels welchem die Gegenstände (12) in den Behandlungsraum (16) hinein und wieder aus diesem heraus transportierbar sind;
c) wenigstens einer Behandlungseinheit (32), mittels welcher einer Behandlung der Gegenstände (12) in dem Behandlungsraum (16) durchführbar ist und welche für den Betrieb ein Arbeitsgas erfordert,
d) einer Versorgungseinrichtung (36), mittels welcher der wenigstens einen Behandlungseinheit (32) das Arbeitsgas zuführbar ist, wobei das Arbeitsgas beim Behandlungsvorgang in den Behandlungsraum (16) gelangt und so zur Kabinenatmosphäre beiträgt,
**dadurch gekennzeichnet, dass**
e) ein Trennsystem (42) vorgesehen ist, welchem Kabinenatmosphäre zuführbar ist und durch welches Arbeitsgas aus der Kabinenatmosphäre abtrennbar ist.

2. Anlage nach Anspruch 1, **dadurch gekennzeichnet, dass** das Versorgungssystem (36) derart mit dem Trennsystem (42) verbunden ist, dass abgetrenntes Arbeitsgas der Behandlungseinheit (32) zuführbar ist, insbesondere dadurch, dass das Trennsystem (42) einen Gasspeicher (66) umfasst, in den abgetrenntes Arbeitsgas leitbar ist.

3. Anlage nach einem der vorhergehenden Ansprüche 1 oder 2, **dadurch gekennzeichnet, dass** das Trennsystem (42) eine mehrstufige Trenneinrichtung (48) umfasst.

4. Anlage nach einem der Ansprüche 1 bis 3, **dadurch gekennzeichnet, dass** das Trennsystem (42) einen Verdichter (52) umfasst, in welchem Kabinenatmosphäre komprimierbar ist, insbesondere dadurch, dass die Trenneinrichtung (48) einen Druckgas-Kältetrockner (56) umfasst, welchem die komprimierte Kabinenatmosphäre zuführbar ist in welchem von der Kabinenatmosphäre mitgeführtes Fluid auskondensierbar ist.

5. Anlage nach einem der Ansprüche 1 bis 4, **dadurch gekennzeichnet, dass** ein Kabinengas-System (24) vorhanden ist, mittels welchem dem Behandlungsraum (16) ein Kabinengas zuführbar ist.

6. Anlage nach Anspruch 5, **dadurch gekennzeichnet, dass** das Kabinengas ein Inertgas, insbesondere Kohlendioxid, ist.

7. Anlage nach Anspruch 5 oder 6, **dadurch gekennzeichnet, dass** das Kabinengas und das Arbeitsgas Gas von derselben Art sind.

8. Anlage nach einem der Ansprüche 1 bis 7, **dadurch gekennzeichnet, dass** das Arbeitsgas ein Inertgas, insbesondere Kohlendioxid, ist.

9. Verfahren zur Oberflächenbehandlung, insbesondere zum Lackieren, von Gegenständen (12), insbesondere Karosserieteilen, bei welchem
a) eine Behandlungskabine (14) einen Behandlungsraum (16) vorgibt, in welchem eine Kabinenatmosphäre herrscht;
b) die Gegenstände (12) mittels eines Transportsystems (26) in den Behandlungsraum (16) hinein und wieder aus diesem heraus transportiert werden;
c) die Gegenstände (12) mittels wenigstens einer Behandlungseinheit (32) in dem Behandlungsraum (16) behandelt werden, welche für den Betrieb ein Arbeitsgas erfordert,
d) der wenigstens einen Behandlungseinheit (32) das Arbeitsgas mittels einer Versorgungseinrichtung (36) zugeführt wird, wobei das Arbeitsgas beim Behandlungsvorgang in den Behandlungsraum (16) gelangt und so zur Kabinenatmosphäre beiträgt,
**dadurch gekennzeichnet, dass**
e) Kabinenatmosphäre einem Trennsystem (42) zugeführt wird, durch welches Arbeitsgas aus der Kabinenatmosphäre abgetrennt wird.

10. Verfahren nach Anspruch 9, **dadurch gekennzeichnet, dass** abgetrenntes Arbeitsgas der Behandlungseinheit (32) zugeführt wird, insbesondere dadurch, dass abgetrenntes Arbeitsgas in einen Gasspeicher (66) geleitet wird.

11. Verfahren nach einem der Ansprüche 9 oder 10, **dadurch gekennzeichnet, dass** die Trennung in mehreren Stufen (50, 54) durchgeführt wird.

12. Verfahren nach einem der Ansprüche 9 bis 11, **dadurch gekennzeichnet, dass** Kabinenatmosphäre in einem Verdichter (52) komprimiert wird, insbesondere dadurch, dass die komprimierte Kabinenatmosphäre einem Druckgas-Kältetrockner (56) zugeführt wird, in welchem von der Kabinenatmosphäre mitgeführtes Fluid auskondensiert wird.

13. Verfahren nach einem der Ansprüche 9 bis 12, **dadurch gekennzeichnet, dass** dem Behandlungsraum (16) ein Kabinengas zugeführt wird, insbesondere dadurch dass als Kabinengas Inertgas, insbesondere Kohlendioxid, verwendet wird.

14. Verfahren nach Anspruch 13, **dadurch gekennzeichnet, dass** als Kabinengas und Arbeitsgas Gas von derselben Art verwendet wird.

15. Verfahren nach einem der Ansprüche 9 bis 14, **dadurch gekennzeichnet, dass** als Arbeitsgas ein Inertgas, insbesondere Kohlendioxid, verwendet wird.

## Revendications

1. Installation de traitement de surface, en particulier de mise en peinture, d'objets (12), en particulier de pièces de carrosserie de véhicule, présentant
a) une cabine de traitement (14) laquelle définit un espace de traitement (16) dans lequel prédomine une atmosphère de cabine ;
b) un système de transport (26) au moyen duquel les objets (12) peuvent être transportés jusque dans l'espace de traitement (16) et peuvent en être ressortis ;
c) au moins une unité de traitement (32) au moyen de laquelle un traitement des objets (12) peut être réalisé dans l'espace de traitement (16) et laquelle nécessite un gaz de procédé pour la mise en oeuvre,
d) un dispositif d'alimentation (36) au moyen duquel le gaz de procédé peut être fourni à la moins une unité de traitement (32), où le gaz de procédé arrive dans l'espace de traitement (16) pendant la procédure de traitement et contribue ainsi à l'atmosphère de cabine,
**caractérisée en ce que**
e) un système de séparation (42) est prévu, auquel une atmosphère de cabine peut être fournie et au moyen duquel un gaz de procédé peut être séparé de l'atmosphère de cabine.

2. Installation selon la revendication 1, **caractérisée en ce que** le système d'alimentation (36) est raccordé au système de séparation (42) de telle sorte qu'un gaz de procédé séparé peut être fourni à l'unité de traitement (32), en particulier **en ce que** le système de séparation (42) comprend un réservoir de gaz (66) jusqu'auquel un gaz de procédé séparé peut être acheminé.

3. Installation selon l'une des revendications 1 ou 2, **caractérisée en ce que** le système de séparation (42) comprend un dispositif de séparation à multiples étages (48).

4. Installation selon l'une des revendications 1 à 3, **caractérisée en ce que** le système de séparation (42) comprend un compresseur (52) dans lequel une atmosphère de cabine peut être comprimée, en particulier **en ce que** le système de séparation (48) comprend un déshydrateur à réfrigération pour gaz comprimé (56) auquel l'atmosphère de cabine comprimée peut être fournie, et dans lequel un fluide entraîné par l'atmosphère de cabine peut être condensé pour en être extrait.

5. Installation selon l'une des revendications 1 à 4, **caractérisée en ce qu'**un système de gaz de cabine (24) est présent, au moyen duquel un gaz de cabine peut être fourni à l'espace de traitement (16).

6. Installation selon la revendication 5, **caractérisée en ce que** le gaz de cabine est un gaz inerte, en particulier du dioxyde de carbone.

7. Installation selon la revendication 5 ou 6, **caractérisée en ce que** le gaz de cabine et le gaz de procédé sont du même type.

8. Installation selon l'une des revendications 1 à 7, **caractérisée en ce que** le gaz de procédé est un gaz inerte, en particulier du dioxyde de carbone.

9. Procédé de traitement de surface, en particulier de mise en peinture, d'objets (12), en particulier de pièces de carrosserie de véhicule, dans lequel
a) une cabine de traitement (14) définit un espace de traitement (16) dans lequel prédomine une atmosphère de cabine ;
b) les objets (12) sont transportés jusque dans l'espace de traitement (16) et en sont ressortis au moyen d'un système de transport (26) ;
c) les objets (12) sont traités dans l'espace de traitement (16) au moyen d'au moins une unité de traitement (32) laquelle nécessite un gaz de procédé pour la mise en oeuvre,
d) le gaz de procédé peut être fourni à la moins une unité de traitement (32) au moyen d'un dispositif d'alimentation (36), où le gaz de procédé arrive dans l'espace de traitement (16) pendant la procédure de traitement et contribue ainsi à l'atmosphère de cabine,
**caractérisé en ce que**
e) une atmosphère de cabine est fournie à un système de séparation (42) au moyen duquel un gaz de procédé peut être séparé de l'atmosphère de cabine.

10. Procédé selon la revendication 9, **caractérisé en ce qu'**un gaz de procédé séparé est fourni à l'unité de traitement (32), en particulier **en ce qu'**un gaz de procédé séparé est acheminé jusque dans un réservoir de gaz (66).

11. Procédé selon l'une des revendications 9 ou 10, **caractérisé en ce que** la séparation est réalisée sur de multiples étages (50, 54).

12. Procédé selon l'une des revendications 9 à 11, **caractérisé en ce qu'**une atmosphère de cabine est comprimée dans un compresseur (52), en particulier **en ce que** l'atmosphère de cabine comprimée est fournie à un déshydrateur à réfrigération pour gaz comprimé (56) dans lequel un fluide entraîné par l'atmosphère de cabine peut être condensé pour en être extrait.

13. Procédé selon l'une des revendications 9 à 12, **caractérisé en ce qu'**un gaz de cabine est fourni à l'espace de traitement (16), en particulier **en ce qu'**un gaz inerte, en particulier du dioxyde de carbone, est utilisé comme gaz de cabine.

14. Procédé selon la revendication 13, **caractérisé en ce que** le même type de gaz est utilisé pour le gaz de cabine et le gaz de procédé.

15. Procédé selon l'une des revendications 9 à 14, **caractérisé en ce qu'**un gaz inerte, en particulier du dioxyde de carbone, est utilisé comme gaz de procédé.
